# EUROPÄISCHE PATENTSCHRIFT

(11) **EP 3 172 025 B1**
(45) Veröffentlichungstag und Bekanntmachung des Hinweises auf die Patenterteilung: **26.03.2025**
(21) Anmeldenummer: 15735626.2
(22) Anmeldetag: 25.06.2015
(51) Int. Cl.: B29K 21/00, B60J 10/35, B29C 48/00, B29C 48/06, B60J 10/00, F16J 15/10, F16J 15/06

(54) **DICHTUNGSSTRANG UND VERFAHREN ZU SEINER HERSTELLUNG**
SEALING STRAND AND METHOD FOR PRODUCING SAME
BOUDIN D'ÉTANCHÉITÉ ET PROCÉDÉ DE PRODUCTION DUDIT BOUDIN D'ÉTANCHÉITÉ

(30) Priorität: 25.07.2014 DE 102014110541
(43) Veröffentlichungstag der Anmeldung: 31.05.2017
(73) Patentinhaber: CQLT SaarGummi Technologies S.à.r.l., 5544 Remich (LU)
(72) Erfinder: KAST, Christian, 66683 Merzig-Brotdorf (DE)
(74) Vertreter: Patentanwälte Bernhardt / Wolff Partnerschaft mbB
(86) Internationale Anmeldenummer: PCT/EP2015/001283
(87) Internationale Veröffentlichungsnummer: WO 2016/012073

(56) Entgegenhaltungen:
- EP-A1- 0 220 429
- EP-A2- 1 891 877
- FR-A1- 2 543 486
- US-A1- 2010 024 976

## Beschreibung

Die Erfindung betrifft einen Dichtungsstrang zur Bildung einer Dichtung unter Verbindung des Dichtungsstrangs mit einem sich entlang eines abzudichtenden Spalts erstreckenden Strangsitz, wobei der Dichtungsstrang einen zur Verklebung mit dem Strangsitz vorgesehenen Bandbereich umfasst. Die Erfindung betrifft ferner ein Verfahren zur Herstellung eines solchen Dichtungsstrangs.

Die Verklebung eines z.B. ein doppeltklebendes Klebeband aufweisenden Dichtungsstrangs im Rollapplikationsverfahren mit einem Strangsitz, z.B. mit einer an einer Fahrzeugtür umlaufenden, den Dichtungsstrang aufnehmenden Klebefläche, erfolgt vorzugsweise unter geringfügiger Dehnung des Dichtungsstrangs. Diese Dehnung begünstigt oftmals eine genaue Platzierung des Dichtungsstrangs auf dem Strangsitz. Andererseits beeinträchtigt eine in die Verklebung eingebrachte Zugspannung des Dichtungsstrangs die Qualität der Klebeverbindung. Insbesondere in Bereichen gekrümmter Verlegung des Dichtungsstrangs kann es zur Lösung der Klebeverbindung kommen.

Aus der FR 2 543 486 geht ein Dichtungsstrang hervor, nach dem Oberbegriff des Anspruchs 1, der im Anschluss an eine Extrusion mit einem Band verbunden wird, das als Markierungsband dient. Ein durch das Band gebildete Markierungen erfassender Detektor kontrolliert so den Vorschub des extrudierten Strangs. Aus EP 1 891 877 A2 ist ein in Längsrichtung nicht dehnbares Dichtungsband bekannt, auf das ein elastisches Dichtmittel aufgebracht und mit einer lösbaren Folie abgedeckt ist und EP 0 220 429 A1 offenbart eine Vorrichtung zum Einlegen von Dichtungsprofilen.

Der Erfindung liegt die Aufgabe zugrunde, einen neuen Dichtungsstrang der eingangs erwähnten Art und ein Verfahren zu seiner Herstellung zu schaffen, wobei sich der Dichtungsstrang bei verbesserter Qualität der Verklebung mit einem Strangsitz unter Zugspannung verarbeiten lässt.

Der diese Aufgabe lösende Dichtungsstrang nach der Erfindung ist dadurch gekennzeichnet, dass bei Dehnung des Dichtungsstrangs in Stranglängsrichtung die der Dehnung entsprechende Zugspannung in dem Bandbereich wenigstens teilweise kompensiert oder kompensierbar ist.

Vorteilhaft wird bei Verarbeitung des Dichtungsstrangs unter Dehnung erreicht, dass die Zugspannung in dem an den Dichtungssitz angrenzenden Bandbereich des Dichtungsstrangs gegenüber der der Dehnung entsprechenden Zugspannung zumindest herabgesetzt, kompensiert oder sogar überkompensiert ist.

Es hat sich herausgestellt, dass eine Verringerung der Zugspannung, die auf den an den Strangsitz angrenzenden Bereich begrenzt ist, bereits ausreicht, um Beeinträchtigungen der Qualität der Klebeverbindung zu verhindern.

Zur Kompensation der Zugspannung in dem an den Strangsitz angrenzenden Bandbereich des Dichtungsstrangs ist der Bandbereich gestaucht, so dass bei Dehnung des Dichtungsstrangs in dem Bandbereich nur ein Abbau des Stauchungsgrades erfolgt und überhaupt keine Zugspannung auftritt.

Alternativ könnte die Entstehung einer Zugspannung in dem Bandbereich bei Dehnung des Dichtungsstrangs in Stranglängsrichtung durch Aufquellen des Bandbereichs im Zuge der Verklebung des Dichtungsstrangs mit dem Strangsitz kompensiert werden. Möglich wäre die Aktivierung oder/und Freisetzung einer den Quellvorgang auslösenden chemischen Substanz durch Wärmeeinwirkung, durch Andruck des Dichtungsstrangs an den Strangsitz oder/ und durch Dehnung des Dichtungsstrangs im Zuge der Verklebung.

Während es denkbar wäre, den Bandbereich in einem Arbeitsgang mit dem übrigen Dichtungsstrang durch Extrusion herzustellen, z.B. als geschäumten Randbereich, bildet den Bandbereich in einer bevorzugten Ausführungsform der Erfindung ein separates Band, das mit einem den übrigen Dichtungsstrang bildenden Elastomerstrang verbunden, insbesondere verklebt, wird.

In einer besonders bevorzugten Ausführungsform handelt es sich dabei um ein mit dem übrigen Dichtungsstrang verklebtes doppeltklebendes Klebeband. Möglich wäre aber auch ein beim Dichtungshersteller erzeugtes Band ohne vorgefertigte Klebeschicht, das erst bei der Verklebung mit dem Strangsitz mit Klebermaterial in Berührung kommt. Ein solches Band könnte mit dem übrigen Dichtungsstrang z.B. auch verschweißt sein.

Zur Herstellung des Dichtungsstrangs kann das Band im Zuge einer Verbindung mit dem übrigen Dichtungsstrang gestaucht oder von vorherein als gestauchtes, vorgefertigtes Band mit dem Dichtungsstrang verbunden werden.

In letzterem Fall kann bei Nutzung eines doppeltklebenden Klebebandes der üblicherweise verwendete, eine Klebeschicht des Klebebandes schützende Abdeckstreifen dazu genutzt werden, das doppeltklebende Klebeband im gestauchten Zustand zu halten.

Die Erfindung wird nachfolgend anhand von Ausführungsbeispielen und der beiliegenden, sich auf eines dieser Ausführungsbeispiele beziehenden Zeichnungen weiter erläutert. Es zeigen:
- Fig. 1: eine die Herstellung eines erfindungsgemäßen Dichtungsstrangs nach dem erfindungsgemäßen Verfahren erläuternde Darstellung,
- Fig. 2: eine Teilansicht eines gemäß Fig. 1 hergestellten Dichtungsstrangs, und
- Fig. 3: eine das Verhalten eines nach Fig. 1 hergestellten Dichtungsstrangs bei seiner Verarbeitung erläuternde Darstellung.

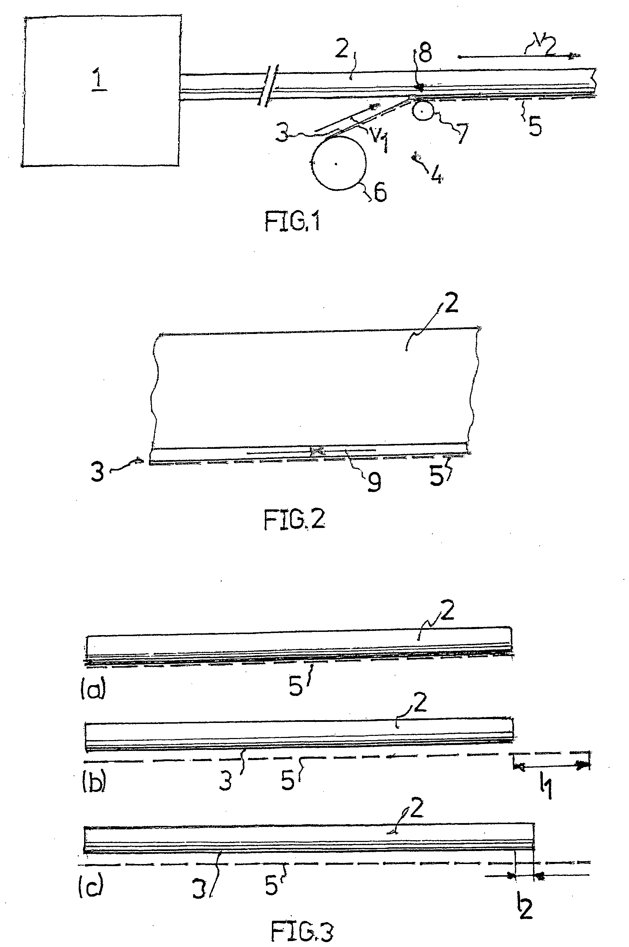

Eine Fertigungsstrecke für einen endlos hergestellten Dichtungsstrang umfasst ein in Fig. 1 schematisch dargestelltes Extrusionswerkzeug 1. Dem Extrusionswerkzeug 1 in Extrusionsrichtung nachgeschaltet sind neben einer (nicht gezeigten) Vulkanisations- oder TPE-Kalibrierstrecke Einrichtungen 4 zur Verbindung eines extrudierten, den Dichtungsstrang bildenden Elastomerstrangs 2 mit einem doppeltklebenden Klebeband 3, auf dessen dem Elastomerstrang 2 abgewandte Klebefläche ein schützender Abdeckstreifen 5, ein sog. Liner, aufgebracht ist.

Der gefertigte Dichtungsstrang ist in dem gezeigten Beispiel für den Versand zu einem Fahrzeughersteller bestimmt, wo der Dichtungsstrang von einer Transportrolle abgewickelt und laufend einer Verarbeitungseinrichtung für die Bildung von Dichtungen an Fahrzeugtüren zugeführt wird.

Die Einrichtungen 4 umfassen eine Vorratsrolle 6, auf welche das doppeltklebende Klebeband 3 mit dem Abdeckstreifen 5 aufgewickelt ist, sowie eine das doppeltklebende Klebeband 3 an einer Verbindungsstelle 8 an den Elastomerstrang 2 anpressende Andruckrolle 7. Weitere, das abgewickelte Klebeband 3 mit einer Vorschubgeschwindigkeit V1 der Verbindungsstelle 8 zufördernde Transporteinrichtungen sind in Fig. 1 nicht gezeigt.

Die genannte Vorschubgeschwindigkeit V1 übersteigt die Extrusionsgeschwindigkeit V2, mit welcher sich der Elastomerstrang 2 in Extrusionsrichtung bewegt. Damit entfällt auf eine bestimmte Länge des extrudierten Elastomerstrangs 2 jeweils eine größere Länge des doppeltklebenden Klebebands 3 und das doppeltklebende Klebeband 3 wird durch die (nicht gezeigten) Transporteinrichtungen und die Andruckrolle 7 unter Stauchung mit dem Elastomerstrang 2 verklebt.

Die in Fig. 2 durch einen Doppelpfeil 9 verdeutlichte Stauchung des doppeltklebenden Klebebandes 3 bleibt durch die Verklebung mit dem Elastomerstrang 2 erhalten, wobei der Elastomerstrang 2 durch die Stauchung des doppeltklebenden Klebebandes 3 seinerseits nur unwesentlich gedehnt wird.

Alternativ zu der beschriebenen Stauchung des doppeltklebenden Klebebandes 3 im Zuge der Verklebung mit dem Elastomerstrang 2 könnte der Elastomerstrang 2 von vornherein mit einem bereits gestauchten Band verklebt werden. Ein solches gestauchtes Band ließe sich dadurch vorfertigen, dass der die beiden Klebeflächen aufweisende Bandstreifen des doppeltklebenden Klebebandes mit dem Abdeckstreifen 5 in gestauchtem Zustand verbunden wird, wobei der Abdeckstreifen 5 den die beiden Klebeflächen aufweisenden Bandstreifen im gestauchten Zustand festhält, wobei der Abdeckstreifen 5 geringfügig unter Zugspannung steht.

Bei der Verarbeitung des in Fig. 3a gezeigten Dichtungsstrangs zu einer Dichtung unter Verklebung mit einem sich entlang eines Fahrzeugtürspalts erstreckenden Dichtungssitz wird gemäß Fig. 3b der Abdeckstreifen 5 entfernt. Losgelöst von dem gestauchten doppeltklebenden Klebeband dehnt er sich entsprechend seiner vorherigen Stauchung um die Länge l1 aus. Bei Verwendung eines vorabgestauchten doppeltklebenden Klebebandes würde sich die Länge des abgezogenen Liners nicht wesentlich verringern.

Der Dichtungsstrang wird im Zuge der Verklebung mit dem Strangsitz geringfügig um die Länge l2 gedehnt, was einem prozesssicheren Applikationsvorgang förderlich ist. Ohne geeignete Gegenmaßnahmen würde eine Verklebung des unter Zugspannung stehenden Dichtungsstrangs mit dem Strangsitz die Festigkeit und/oder Dauerhaltbarkeit der Verklebung beeinträchtigen. Dies gilt insbesondere für gekrümmte Bereiche des Strangsitzes und entsprechend gekrümmt verlegte Bereiche des Dichtungsstrangs.

Vorteilhaft führt infolge der Stauchung des doppeltklebenden Klebebandes die Dehnung um l2 in dem gezeigten Ausführungsbeispiel zu keiner Zugspannung im Klebeband. Es wird lediglich die Stauchung abgebaut.

Es versteht sich, dass die Zugspannung des Dichtungsstrangs hiervon abweichend im Bereich des doppeltklebenden Klebebandes genau kompensiert oder nur geringer als im Elastomerstrang gehalten werden könnte, als sie der Dehnung des Dichtungsstrangs entspricht.

In jedem Fall ist der Zugspannungszustand der unmittelbar an den Strangsitz angrenzenden Bereiche des Dichtungsstrangs vorteilhaft verringert, was einer dauerhaften Haltbarkeit der Klebeverbindung entgegenkommt.

## Patentansprüche

1. Dichtungsstrang zur Bildung einer Dichtung unter Verbindung des Dichtungsstrangs mit einem sich entlang eines abzudichtenden Spalts erstreckenden Strangsitz, wobei der Dichtungsstrang einen zur Verklebung mit dem Strangsitz vorgesehenen Bandbereich (3) umfasst,
**dadurch gekennzeichnet,**
**dass** bei Dehnung des Dichtungsstrangs in Stranglängsrichtung die der Dehnung entsprechende Zugspannung in dem Bandbereich (3) wenigstens teilweise kompensiert oder kompensierbar ist,
wobei zur Kompensation der Zugspannung in dem an den Strangsitz angrenzenden Bandbereich des Dichtungsstrangs der Bandbereich gestaucht ist, so dass bei Dehnung des Dichtungsstrangs in dem Bandbereich nur ein Abbau des Stauchungsgrades erfolgt und überhaupt keine Zugspannung auftritt.

2. Dichtungsstrang nach Anspruch 1,
**dadurch gekennzeichnet,**
**dass** der Bandbereich (3) unter Stauchung in Stranglängsrichtung mit dem übrigen Dichtungsstrang verbunden ist.

3. Dichtungsstrang nach Anspruch 1 oder 2,
**dadurch gekennzeichnet,**
**dass** der übrige Dichtungsstrang einen Elastomerstrang (2) umfasst und der Bandbereich (3) mit dem Elastomerstrang (2) verbunden, insbesondere verklebt, ist.

4. Dichtungsstrang nach einem der Ansprüche 1 bis 3,
**dadurch gekennzeichnet,**
**dass** eine zur Verklebung mit dem Strangsitz vorgesehene Klebefläche des Bandbereichs (3) durch eine Abdeckung (5) geschützt ist.

5. Dichtungsstrang nach Anspruch 4,
**dadurch gekennzeichnet,**
**dass** die Abdeckung (5) unter Zugspannung mit der Klebefläche verbunden worden ist.

6. Dichtungsstrang nach einem der Ansprüche 1 bis 5,
**dadurch gekennzeichnet,**
**dass** der Bandbereich durch ein doppeltklebendes Klebeband (3) gebildet ist.

7. Verfahren zur Herstellung eines Dichtungsstrangs nach Anspruch 1 für die Bildung einer Dichtung unter Verbindung des Dichtungsstrangs mit einem sich entlang eines abzudichtenden Spalts erstreckenden Strangsitz, wobei der Dichtungsstrang mit einem Band (3) versehen wird, über das er mit dem Strangsitz verklebbar ist,
**dadurch gekennzeichnet,**
**dass** das Band (3) unter Stauchung in Stranglängsrichtung oder in derart gestauchtem Zustand mit dem übrigen Dichtungsstrang verbunden wird.

8. Verfahren nach Anspruch 7,
**dadurch gekennzeichnet,**
**dass** das Band (3) mit einem extrudierten Elastomerstrang (2) des Dichtungsstrangs verbunden, insbesondere verklebt, wird.

9. Verfahren nach Anspruch 8,
**dadurch gekennzeichnet,**
**dass** das Band (3) fortlaufend mit dem extrudierten Elastomerstrang (2) verbunden und einer Verbindungsstelle (8) mit einer die Extrusionsgeschwindigkeit (V2) übersteigenden Vorschubgeschwindigkeit (V1) zugeführt wird.

10. Verfahren nach Anspruch 8,
**dadurch gekennzeichnet,**
**dass** das Band (2) vor der Verbindung mit dem übrigen Dichtungsstrang durch eine unter Zugspannung stehende Abdeckung (5) einer zur Verklebung mit dem Strangsitz vorgesehenen Klebefläche des Bandes (3) in dem gestauchten Zustand gehalten wird.

## Claims

1. Sealing strand for forming a seal by connecting the sealing strand with a strand seat extending along a gap to be sealed, wherein the sealing strand comprises a tape region (3) provided for adhesive bonding to the strand seat,
**characterized in that**
when elongating the sealing strand in the strand longitudinal direction, the tensile stress corresponding to the elongation in the tape region (3) is at least partially compensated or able to be compensated, wherein the tape region is compressed to compensate for the tensile stress in the tape region of the sealing strand that is adjacent to the strand seat, such that only a reduction of the degree of compression but no tensile stress at all arises in the elongation of the sealing strand in the tape region.

2. Sealing strand according to Claim 1,
**characterized in that**
the tape region (3) while being compressed in the strand longitudinal direction is connected to the remaining sealing strand.

3. Sealing strand according to Claim 1 or 2,
**characterized in that**
the remaining sealing strand comprises an elastomer strand (2), and the tape region (3) is connected, in particular adhesively bonded, to the elastomer strand (2).

4. Sealing strand according to one of Claims 1 to 3,
**characterized in that**
an adhesive surface of the tape region (3) provided for adhesive bonding to the strand seat is protected by a cover (5).

5. Sealing strand according to Claim 4,
**characterized in that**
the cover (5) has been connected to the adhesive surface under tensile stress.

6. Sealing strand according to one of Claims 1 to 5,
**characterized in that**
the tape region is formed by a double-adhesive tape (3).

7. Method for producing a sealing strand according to Claim 1 for forming a seal by connecting the sealing strand to a strand seat extending along a gap to be sealed, wherein the sealing strand is provided with a tape (3) by way of which said sealing strand is able to be adhesively bonded to the strand seat,
**characterized in that**
the tape (3) is connected to the remaining sealing strand while being compressed in the strand longitudinal direction, or in a state compressed in such a manner.

8. Method according to Claim 7,
**characterized in that**
the tape (3) is connected, in particular adhesively bonded, to an extruded elastomer strand (2) of the sealing strand.

9. Method according to Claim 8,
**characterized in that**
the tape (3) is continuously connected to the extruded elastomer strand (2) and fed to a connection point (8) at an infeed speed (V1) exceeding the extrusion speed (V2).

10. Method according to Claim 8,
**characterized in that**
prior to connecting to the remaining sealing strand, the tape (2) is kept in the compressed state by a cover (5), which is under tensile stress, of an adhesive surface of the tape (3) that is provided for adhesive bonding to the strand seat.

## Revendications

1. Boudin d'étanchéité destiné à former un joint étanche avec liaison du boudin d'étanchéité à un siège de boudin s'étendant le long d'une fente à étanchéifier, le boudin d'étanchéité comprenant une zone de bande (3) prévue pour un collage au siège de boudin, **caractérisé en ce que** lors de l'allongement du boudin d'étanchéité dans la direction longitudinale du boudin, la contrainte de traction correspondant à l'allongement est ou peut être au moins partiellement compensée dans la zone de bande (3),
la zone de bande étant refoulée, pour la compensation de la contrainte de traction dans la zone de bande adjacente au siège de boudin du boudin d'étanchéité, de telle sorte que lors de l'allongement du boudin d'étanchéité, il ne se produit dans la zone de bord qu'une dégradation du degré de refoulement et aucune contrainte de traction n'apparaît.

2. Boudin d'étanchéité selon la revendication 1, **caractérisé en ce que** la zone de bande (3) est reliée au reste du boudin d'étanchéité avec refoulement dans la direction longitudinale du boudin.

3. Boudin d'étanchéité selon la revendication 1 ou 2, **caractérisé en ce que** le reste du boudin d'étanchéité comprend un boudin élastomère (2) et la zone de bande (3) est reliée, en particulier collée, au boudin élastomère (2).

4. Boudin d'étanchéité selon l'une des revendications 1 à 3, **caractérisé en ce qu'**une surface de collage de la zone de bande (3), prévue pour un collage au siège d'étanchéité, est protégée par un recouvrement (5).

5. Boudin d'étanchéité selon la revendication 4, **caractérisé en ce que** le recouvrement (5) a été relié à la surface de collage sous une contrainte de traction.

6. Boudin d'étanchéité selon l'une des revendications 1 à 5, **caractérisé en ce que** la zone de bande est formée par une bande adhésive doublement adhésive (3).

7. Procédé de fabrication d'un boudin d'étanchéité selon la revendication 1, pour la formation d'un joint étanche avec liaison du boudin d'étanchéité à un siège de boudin s'étendant le long d'une fente à étanchéifier, le boudin d'étanchéité étant pourvu d'une bande (3) par laquelle il peut être collé au siège de boudin, **caractérisé en ce que** la bande (3) est reliée au reste du boudin d'étanchéité avec refoulement dans la direction longitudinale du boudin ou dans un tel état refoulé.

8. Procédé selon la revendication 7, **caractérisé en ce que** la bande (3) est reliée, en particulier collée, à un boudin élastomère (2) extrudé du boudin d'étanchéité.

9. Procédé selon la revendication 8, **caractérisé en ce que** la bande (3) est reliée en continu au boudin d'étanchéité (2) extrudé et est introduite au niveau d'un site de liaison (8) à une vitesse d'avancement (V1) supérieure à la vitesse d'extrusion (V2).

10. Procédé selon la revendication 8, **caractérisé en ce que** la bande (2) est maintenue dans l'état refoulé avant la liaison au reste du boudin d'étanchéité par un recouvrement (5) se trouvant sous une contrainte de traction d'une surface adhésive de la bande (3), prévue pour un collage au siège de boudin.
